# EUROPEAN PATENT APPLICATION

(11) **EP 1 388 390 A1**
(43) Date of publication of application: **11.02.2004**
(21) Application number: 03024170.7
(22) Date of filing: 15.06.1999
(51) Int. Cl.: B23K 20/12, B61D 17/04, F16S 1/02

(54) **Structural body joined by friction stir welding**

(30) Priority: 16.06.1998 JP 16801798
(62) Divisional of application: 99925318.0
(71) Applicant: Hitachi, Ltd., Chiyoda-ku, Tokyo 101-8010 (JP)
(72) Inventor: Ezumi, Masakuni, c/o Hitachi, Ltd. Kasado Adm.Div., Yamaguchi-ken 742-8601 (JP); Satou, Akihiro, c/o Hitachi, Ltd. Kasado Adm.Div., Yamaguchi-ken 742-8601 (JP); Fukuyori, Kazushige, c/o Kasado Kikai Co., Ltd., Yamaguchi-ken 742-8601 (JP)
(74) Representative: Paget, Hugh Charles Edward

(57) **Abstract**

The object of the present invention is to improve the appearance of a vehicle body and to reduce the manufacturing cost that involves bonding face plates having ribs formed on one side surface thereof through friction stir bonding.

Actually, plural extrusion members (100) each having plural ribs (105) formed on one surface of a face plate (101) are mounted on a frame (40) with the surface not having the ribs (105) facing downward, the end regions of the adjacent members (100,100) being butted to each other, friction stir bonding the end regions of said members (100) from the upper direction with a rotary body (20), and then providing a hairline finish to said surface not having the ribs, which constitutes the exterior surface of the vehicle body. According to the invention, there is substantially no need to cut off the joint bead, which improves the appearance of the vehicle body and reduces the manufacturing cost.

## Description

### FIELD OF THE INVENTION

The present invention relates to a method for bonding extrusion members through friction stir bonding so as to manufacture a structural body, for example a vehicle.

### DESCRIPTION OF THE RELATED ART

As disclosed in Japanese Patent Laid-Open Publication No. 9-309164 (EP 0797043A2), a friction stir bonding method is a technique using a round shaft (called a rotary body) being rotated and inserted in the joint region of members and moving the rotary body along the junction line, thereby heating, mobilizing and plasticising the material, and realizing a solid-phase welding of the members. The rotary body comprises a small-diameter portion to be inserted to the joint region, and a large-diameter portion to be positioned externally. The small-diameter portion and the large-diameter portion are coaxial. The large-diameter side is rotated. The boundary between the small-diameter portion and the large-diameter portion is partially inserted to the joint region. The bonding performed by the friction stir bonding method can be applied to a butt joint and a lap joint.

Moreover, as shown in FIG. 7 of the above-mentioned disclosure, the joint region of the two members are provided with a protrusion extruding toward the rotary body, which is to be bonded by the friction stir bonding.

One example of the technique for manufacturing a railway car is disclosed in Japanese Patent Publication No. 6-45340, wherein the vehicle body of a railway car is manufactured by welding together extruded members made of aluminum alloy. The extruded member is equipped with plural number of ribs provided on one surface of a face plate, which is placed on a frame with the surface not having the ribs facing downward, and welding is performed from the side having the rib. The welding process is carried out so that a weld bead is formed on the back surface thereof.

Since the surface without the ribs is used as the exterior surface of the vehicle body, the weld bead formed on the back surface is cut off to form a smooth surface. Thereafter, a hairline finishing process is performed to the exterior surface of the body. If necessary, a transparent coating is further applied to the surface. Or in another example, the weld bead is cut off and putty is applied to the surface before the coating is applied.

### SUMMARY OF THE INVENTION

Since the weld bead formed on the exterior surface of the vehicle body must be removed in order to form the vehicle body through a welding process, the manufacture process involves increased number of steps. Moreover, when welding the vehicle body, the material is heated to very high temperature, that causes deformation of the vehicle, and thereby deteriorates the appearance. If the vehicle body is completed by a hairline finishing without coating the vehicle body, the weld bead formed to the welding portion deteriorates the appearance of the vehicle body. The weld bead varies in width, and has a wavy appearance. This is why the weld bead deteriorates the exterior appearance of the body. Even if transparent coating is applied to the body after the hairline finishing, the appearance is not improved.

The object of the present invention is to manufacture a structural body, such as a vehicle body, having an attractive appearance using the friction stir bonding method.

Such object of the present invention is achieved by:
abutting ends of face plates of two members;
friction stir bonding said ends of said face plates from only one side of said surface; and
performing buffing or blasting to the opposite side of said surface performed of said friction stir bonding, thereby finishing said surface as the exterior surface of a structural body.

### BRIEF DESCRIPTION OF THE DRAWINGS

FIG. 1 is a vertical cross-sectional view showing the friction stir bonding joint according to one embodiment of the present invention; and
FIG. 2 is a vertical cross-sectional view showing the joint after performing the friction stir bonding.

### EXPLANATION OF THE REFERENCE NUMBERS

20: rotary body, 30: joint bead, 40: frame, 100: extruded member, 101: face plate, 102: projected region, 105: rib.

### DETAILED DESCRIPTION OF PREFERRED EMBODIMENT

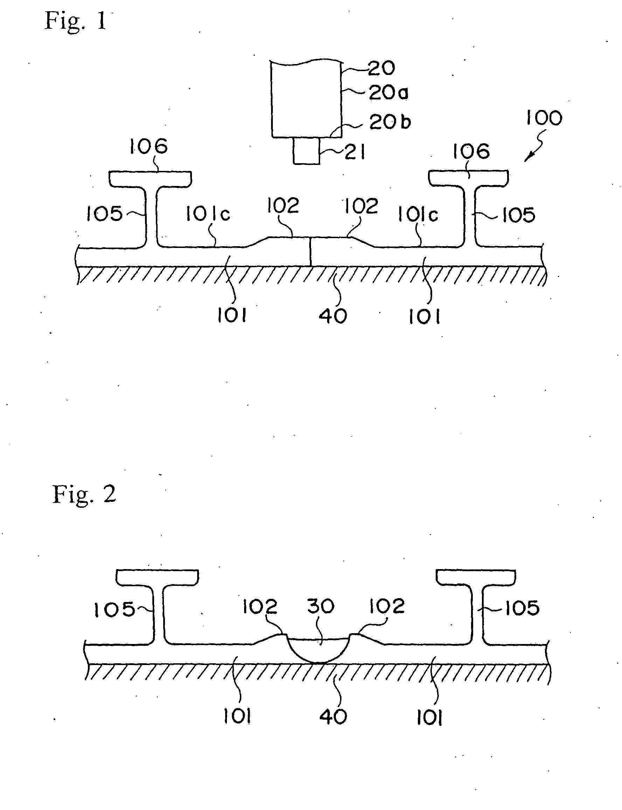

A preferred embodiment of the present invention will now be explained with reference to FIG. 1 and FIG. 2. The present embodiment applies the present invention to form a body of a railway car. The members to be joined together are, for example, extruded members 100 formed of aluminum alloy. The side structure, the roof structure, the gable structure and the floor structure of the vehicle body of the railway car is formed by bonding plural extruded members 100. In the case of the side structure, the roof structure and the floor structure, the length of the member 100 is at maximum equal to the length of the vehicle body. The longitudinal direction of the member 100 is positioned toward the longitudinal direction of the vehicle body. The gable structure defines the end portion of the longitudinal direction of the vehicle body.

The member 100 comprises a face plate 101 and plural ribs 105 formed to one side of the face plate. A plate 106 parallel to the face plate is formed to the tip of each rib 105. After joining plural members together, parts such as pillars, common rafters or mounting seats for equipment are welded to the plate 106. In the case of the side structure, the roof structure and the gable structure of the vehicle body, the surface equipped with the ribs 105 is positioned to face the interior, and the other side faces the exterior of the vehicle.

Each end of the member 100 abutting against another member 100 is equipped with a projected region 102 protruding to the side of the ribs 105. The projected region 102 has a certain amount of width and thickness. The projected region 102 may also be called the thick region. The end portion thereof is a perpendicular surface orthogonal to the face plate 101.

When performing friction stir bonding, plural members 100 , 100 are mounted on the frame 40 with the side equipped with ribs 105 facing upward. The perpendicular surfaces at the end portions of each member 100 are placed to contact one another. In such state, the members 100, 100 are bounded to the frame 40. In this state, the frame 40 is placed under the perpendicular surfaces. Upon bonding, the members 100, 100 are pressed onto the frame 40 from above by a device or a vise and the like and bounded thereto. Moreover, the members are bounded on the frame 40 so that the gap formed between the butted end portions of the members 100, 100 is minimized. The number of members 100 mounted on the frame 40 is two or more.

The friction stir bonding is performed in such state. Upon bonding, rollers are utilized that move along with the movement of the rotary body 20 for friction stir bonding. The rollers are positioned in front of and behind the rotary body 20 in the direction of movement of the body 20. The roller presses either the left and right sides of the projected regions 102, 102 or the upper surface of the projected regions.

The rotary body 20 comprises a small-diameter portion 21 formed on the tip of a round rod having a larger diameter. The boundary 20b between the large-diameter portion 20a and the small-diameter portion 21 of the rotary body 20 is formed to have an arc shape concaved toward the large-diameter portion 20a. The small-diameter portion is a screw. The bonding is performed by rotating the rotary body 20, inserting the same between the members 100, 100, and moving the rotary body 20 along the joint line. The axial center of the rotary body 20 is positioned so that the large-diameter portion 20a is tilted rearward against the direction of movement of the rotary body 20. Therefore, the rear end of the boundary 20b is inserted to the members 100, 100 but the front end of the boundary is positioned outward (upper direction in FIG. 1) than the outer (upper) surface of the apex of the protruded regions 102, 102. The rear end of the boundary 20b is positioned between the protruded regions 102, 102 and the outer surface 101c (the surface having the ribs 105, upper surface in FIG. 1) of the face plate 101 of the non-protruded regions. The terms "rear end" and "front end" are based on the direction of movement of the rotary body 20. The tip of the small-diameter portion 21 does not penetrate the members 100, 100. The tip of the small-diameter portion 21 is positioned near the frame 40.

The sum width obtained by adding the width of the apex of two protruded regions 102, 102 is greater than the diameter of the large-diameter portion 20a of the rotary body 20. The widths of the two protruded regions are the same. The rotary center of axis of the rotary body 20 is positioned to the center of width of the two protruded regions.

Though the ends of the members 100, 100 are abutted against each other, since the members 100 are long, there are areas where the ends do not contact one another. The gap is filled by the metal flowing from the protruded regions 102, 102. The outer surface (the upper surface in FIG. 2) of the joint bead 30 formed to the protruded regions 102, 102 is concaved than the surrounding protruded regions 102, 102. The outer surface of the joint bead 30 is somewhat arc-shaped, with a concaved center.

After the bonding, the joint structure body is further bonded through friction stir bonding or normal welding so as to form a vehicle body. After forming the vehicle body, hairline finishing is performed to necessary areas of the outer (exterior) surface of the vehicle body, such as the outer side structure or the gable structure, in order to finish the body. Especially, the side structure is required to have an attractive surface.

In the friction stir bonding, the tip of the small-diameter portion 21 will not contact the frame 40, but the influence provided by the small-diameter portion extends downward beyond the tip of the portion 21. The gap formed between the two members 100, 100 is filled with metal. The gap should be as small as possible. Therefore, the two members 100, 100 are substantially joined in the direction of thickness of the members. Since the exterior surface of the members 100 (opposite surface from the protruded region 102, opposite surface from the ribs 105, lower surface in FIG. 1) is somewhat cut off during the hairline finishing process, the non-bonded portion existing between the joined members, if any, will become indistinctive. Moreover, even if a small amount of metal flows out from the gap between the butted surface of the members 100, 100 to the exterior surface side of the face plate 101, it will be removed by the hairline finishing. By controlling the bonding work so that no uneven area is formed on the outer surface of the butted portion, no metal is dispersed and no non-bonded portion is generated, the need for other cutting processes become unnecessary. Therefore, a friction stir bonding performed from the rib-side of the members enables to provide a hairline-finished vehicle body.

In the case of a normal welding process, the weld bead is discolored according to the material of the welding rod, and therefore, even if the protruded weld bead is cut off, the hairline finishing causes the weld bead to stand out, and therefore deteriorates the appearance. Even if the material of the welding rod is the same as that of the welded members, the weld bead tends to stand out. However, since the friction stir bonding does not involve adding any other material, and since the temperature of the bonding is low, less discoloration is observed, the joint portion becoming less apparent, improving the appearance.

Even further, since the width of the joint bead formed by the friction stir bonding is uniform and in a straight line, the appearance is improved compared to the normal weld bead.

Moreover, since the friction stir bonding does not melt the members, the process is carried out in a relatively low temperature, and the deformation of the of the flatness of the face plate in the vicinity of the joint regions is minimized.

Furthermore, since the protruded region 102 is not formed to the external surface, there is no need to cut off the protruded region 102, and the cost for carrying out the process is reduced. A normal welding method requires removal of the weld bead formed to the lower surface of the weld (back bead) . However, according to the joint method explained in the present embodiment, there is no need to remove the weld bead, and the cost for carrying out the method is low.

In some cases, after performing the above-mentioned friction stir bonding, a transparent coating is applied to the surface of the body.

The hairline finishing process is performed for example by rotating a circular cylinder member having a cloth-file mounted to the outer peripheral thereof and filing the face plate 101, and thereafter, rotating a circular cylinder member having plural wires equipped thereto for further filing (cutting) of the surface plate. As explained, the hairline finishing may be classified as a buffing process. Therefore, a buffing process may be performed instead of the hairline finishing process. In another example, a blasting process may be performed. In yet another example, a satin finish (scratch-brush finish) may be performed using a glass-bead blast.

As explained, according to the present embodiment, the side structure and the gable structure manufactured using the friction stir bonding method is assembled to form the vehicle body, and the exterior surface of the formed body is then finished by buffing or blasting process, thereby providing a vehicle body with improved appearance at low cost. The present embodiment is especially effective when applied to the easily-visible side structure.

Even if a non-transparent coating is applied to the face plate, the number of manufacturing steps necessary will be reduced greatly since there is no need to cut off the weld bead. The advantages of the present embodiment could easily be understood when compared to the case where the protrusions 102, 102 are positioned outward forming the exterior of the vehicle body.

The thickness of the whole area of the face plate 101 starting from the end (protruded region 102) of the member 100 to the rib 105 closest thereto can be formed thicker than the thickness of the other areas (for example the areas between rib 105 and another rib 105) of the face plate.

When friction stir bonding is performed, the plate thickness of the joint bead area becomes thin, but if the strength of the plate is sufficient, the friction stir bonding can be applied to members having no protruded areas. In this case, of course, the friction stir boning is performed from the non-exterior surface (for example, the surface with the ribs).

The butted portion of the two members 100, 100 may be sloped so that the V-shaped cross section opens toward the ribs, but in this case, the amount of movement of the plasticised metal from the protrusions 102, 102 must be increased. Moreover, the exterior surface side (the lower side in FIG. 1) of the butted region of the face plates 101, 101 may form a small inverse-V shape.

A hairline finishing process is preferred in the above-mentioned embodiment, but a normal coating finish process can be performed instead of the hairline finishing process.

The present invention may be applied to the case where hollow extruded members are joined to form a structural body or a vehicle body. As disclosed in Japanese Patent Laid-Open Publication No. 9-309164 (EP 0797043A2), hollow extruded members are formed by two parallel face plates and plural ribs connecting the two face plates. As shown in FIG. 7 of the prior art reference, the joint portion is equipped with protrusions extruding outward from the outer surface of the members. The protrusions are formed on both outer surfaces of the members. Similar to the embodiment of the present invention, the members shown in FIG. 7 are bonded through friction stir bonding performed from the protruded sides. The outer surface of the joint bead is protruded compared to the non-protruded areas of the members. After the bonding, one protrusion facing the exterior of the vehicle body is cut off. The cutting is performed so that the joint constitutes the same plane as the face plate. Therefore, no surface irregularities exist in the outer surface of the vehicle body. Thereafter, hairline finishing is provided to the outer surface, completing the vehicle body.

According to the prior art, the joint region formed by the friction stir bonding is cut off to form an even surface. Since friction stir bonding causes small discoloration, removing the joint region provides an attractive outer surface.

Moreover, as disclosed in FIG. 9 of the above-mentioned Japanese Patent Laid-Open Publication No. 9-300164 (EP 0797043A2), the friction stir bonding process may be applied to bond hollow extruded members from only one side. In the example, the face plate on one side of a hollow extruded member is formed to extend toward the adjacent hollow extruded member. The extended face plates of adjacent members are bonded together through friction stir bonding, as shown in FIGS. 1 and 2, from the side of the other face plate. Next, the face plates opposite from the bonded face plates are bonded together via a third plate through friction stir bonding. Then, hairline finishing process is carried out to the exterior surface of the protruded face plates (the other side from the friction stir bonded surface). The outer surface of said protruded face plate forms a flat plane, as shown in FIG. 2. The technical scope of the present invention is not limited to the terms used in the claims or in the summary of the present invention, but is extended to the range in which a person skilled in the art could easily substitute based on the present disclosure.

### INDUSTRIAL APPLICABILITY

The present invention enables to provide a structural body formed through friction stir bonding having an improved appearance.

The following numbered paragraphs (paras.) contain statements of broad combinations of the inventive technical features herein disclosed:-
1. A method of manufacturing a structural body, the method comprising:
   butting the end regions of face plates of two members;
   friction stir bonding said butted end regions of said face plates only from one side thereof; and
   buffing or blasting the surface opposite from said side where said friction stir bonding is performed so as to finish said surface as an exterior surface of a structural body.
2 . A method of manufacturing a structural body according to para. 1, wherein hairline finishing is performed as said buffing or blasting.
3 . A method of manufacturing a structural body according to para. 1, wherein said face plate includes a thick region protruded to said one side of said end region, the method further comprising butting said thick regions of said two members; and friction stir bonding said butted end portions from said thick region side.
4. A method of manufacturing a structural body, the method comprising:
   mounting two members, each having plural ribs formed to one side of a face plate, on a frame with the surface not having said ribs facing downward, the end regions of said face plates butted against each other;
   friction stir bonding said butted end regions of said face plates only from said one side having ribs, wherein said friction stir bonding is performed so that metal will not flow lower than said surface not having said ribs; and
   buffing or blasting said surface not having said ribs so as to finish said surface as an exterior surface of a structural body.
5. A method of manufacturing a structural body according to para. 4, wherein hairline finishing is performed as said buffing or blasting.
6. A method of manufacturing a structural body, the method comprising:
   butting a protruded region formed on the end region of a face plate of a first member against a protruded region formed on the end region of a face plate of a second member;
   friction stir bonding said butted protruded regions from the protruded side;
   cutting off said protruded regions so that they substantially constitute the same plane as the other regions of said face plate; and
   buffing or blasting the surface that had said protruded regions so as to finish said surface as an exterior surface of a structural body.
7. A method of manufacturing a structural body according to para. 6, wherein hairline finishing is performed as said buffing or blasting.
8. A method of manufacturing a structural body, the method comprising:
   preparing two members, each member having two face plates connected to one another by plural ribs placed in between, one face plate being protruded than the end region of the other face plate;
   butting the end region of said one face plate of said member against that of the other member;
   friction stir bonding said butted portion from the other face plate side;
   joining said other face plates of said two members together via a third plate; and
   buffing or blasting the exterior side of said one face plate so as to finish said surface as an exterior surface of a structural body.
9. A method of manufacturing a structural body according to para. 8, wherein hairline finishing is performed as said buffing or blasting.
10. A method of manufacturing a vehicle body, the method comprising:
   butting the end regions of face plates of two members;
   friction stir bonding said butted end regions of said face plates only from one side thereof; and
   buffing or blasting the surface opposite from said side where said friction stir bonding is performed so as to finish said surface as an exterior surface of a vehicle body.
11. A method of manufacturing a vehicle body according to para. 10, wherein hairline finishing is performed as said buffing or blasting.
12. A method of manufacturing a vehicle body, the method comprising:
   butting a protruded region formed on the end region of a face plate of a first member against a protruded region formed on the end region of a face plate of a second member;
   friction stir bonding said butted protruded regions from the protruded side;
   cutting off said protruded regions so that they substantially constitute the same plane as the other regions of said face plate; and
   buffing or blasting the surface that had said protruded regions so as to finish said surface as an exterior surface of a vehicle body.
13. A method of manufacturing a vehicle body according to para. 12, wherein hairline finishing is performed as said buffing or blasting.
14. A method of manufacturing a vehicle body, the method comprising:
   preparing two members, each member having two face plates connected to one another by plural ribs placed in between, one face plate being protruded than the end region of the other face plate;
   butting the end region of said one face plate of said member against that of the other member;
   friction stir bonding said butted portion from the other face plate side;
   joining said other face plates of said two members together via a third plate; and
   buffing or blasting the exterior side of said one face plate so as to finish said surface as an exterior surface of a vehicle body.
15. A method of manufacturing a vehicle body according to para. 14, wherein hairline finishing is performed as said buffing or blasting.
16. A vehicle body comprising two members, the end regions of said members being bonded together through friction stir bonding; one surface of the bonded region formed by said friction stir bonding being finished by buffing or blasting; and said one surface being the exterior surface of said structural body.
17. A structural body according to para. 16, wherein said joined region refers to where one face plate is butted against another surface plate; and said friction stir bonding is performed from the other surface side.
18 . A structural body comprising a first member and a second member, both one surface and the other surface of said first member being joined to those of said second member through friction stir bonding;
   the joint bead and the non-joint bead of said one surface constituting the same plane, said one surface being finished by buffing or blasting; and
   said one surface forming the exterior surface of said structural body.
19. A structural body comprising:
   two members, each member having two face plates connected to one another by plural ribs placed in between, one face plate being protruded than the end region of the other face plate;
   said one face plates of said two members being bonded together from the other face plate side through friction stir bonding;
   said other face plates of said two members being bonded together via a third plate; and
   the exterior side of said one face plate being finished by buffing or blasting, said exterior side forming the exterior surface of said structural body.
20. A vehicle body comprising two members, the end regions of said members being bonded together through friction stir bonding; one surface of the bonded region formed by said friction stir bonding being finished by buffing or blasting; and said one surface being the exterior surface of said vehicle body.
21. A vehicle body comprising a first member and a second member, both one surface and the other surface of said first member being joined to those of said second member through friction stir bonding;
   the joint bead and the non-joint bead of said one surface constituting the same plane, said one surface being finished by buffing or blasting; and
   said one surface forming the exterior surface of said vehicle body.
22. A vehicle body comprising:
   two members, each member having two face plates connected by plural ribs placed in between, one face plate being protruded than the end region of the other face plate;
   said one face plates of said two members being bonded together from the other face plate side through friction stir bonding;
   said other face plates of said two members being bonded together via a third plate; and
   the exterior side of said one face plate being finished by buffing or blasting, said exterior side forming the exterior surface of said vehicle body.

## Claims

1. A structural body including two members (100) having respective face plates (102) which are joined at abutting ends by a friction stir bond (30), said friction stir bond (30) being formed from a first side only of said face plates (102) and the second side of said face plates, opposite said first side thereof, providing an exterior surface of said structural body, **characterised in that** at the region of said bond (30) said exterior surface is finished by buffing or blasting.

2. A structural body according to claim 1, wherein said exterior surface is finished by hairline finishing and is visible at the exterior of the completed structural body.

3. A structural body according to claim 1 or 2, wherein
(i) each said member has a second face plate spaced from the first said face plate thereof which is subjected to the friction stir bonding, said first and second face plates being connected by plural ribs between them and said second face plate lying on said first side of said first plate, said respective first face plates protruding laterally further than said second face plates towards said ends thereof which are joined by the friction stir bonding, and
(ii) said second face plates are connected via a third plate.

4. A structural body according to any one of claims 1 to 3, which is a vehicle body, said exterior surface being an exterior surface of the vehicle body.
